# EUROPÄISCHE PATENTSCHRIFT

(11) **EP 3 562 628 B1**
(45) Veröffentlichungstag und Bekanntmachung des Hinweises auf die Patenterteilung: **31.03.2021**
(21) Anmeldenummer: 18704503.4
(22) Anmeldetag: 05.02.2018
(51) Int. Cl.: B25J 9/04, F01D 25/28, F23R 3/60

(54) **VERFAHREN ZUR MONTAGE UND/ODER DEMONTAGE VON BRENNERN, VORRICHTUNG ZUR VERWENDUNG IN DEM VERFAHREN SOWIE ANORDNUNG**
METHOD FOR ASSEMBLY AND/OR DISASSEMBLY OF BURNERS, DEVICE FOR USE IN THE METHOD, AND ARRANGEMENT
PROCÉDÉ DE MONTAGE ET/OU DE DÉMONTAGE DES BRÛLEURS, DISPOSITIF CONÇU POUR ÊTRE UTILISÉ LORS DE CE PROCÉDÉ ET SYSTÈME.

(30) Priorität: 03.03.2017 DE 102017203465
(43) Veröffentlichungstag der Anmeldung: 06.11.2019
(73) Patentinhaber: Siemens Energy Global GmbH & Co. KG, 81739 München (DE)
(72) Erfinder: RICHTER, Matthias, 12247 Berlin (DE); WOITSCHECK, Rolf-Dieter, 14089 Berlin (DE)
(86) Internationale Anmeldenummer: PCT/EP2018/052805
(87) Internationale Veröffentlichungsnummer: WO 2018/158045

(56) Entgegenhaltungen:
- EP-A1- 2 070 663
- EP-A1- 2 905 430
- US-A- 6 141 862
- US-A1- 2013 139 368
- US-A1- 2014 123 656

## Beschreibung

Die vorliegende Erfindung betrifft ein Verfahren zur Montage und/oder Demontage von Brennern einer Gasturbine und/oder von eines Übergangsstücks einer Brennkammer einer Gasturbine. Darüber hinaus betrifft die vorliegende Erfindung eine Vorrichtung zur Verwendung in dem Verfahren.

Gasturbinen mit einer ringförmigen Brennkammer umfassen in der Regel zumindest eine ringförmige Brenneranordnung mit einer Mehrzahl von Brennern, die an dem Eintritt des ringförmigen Brennraums in Umfangsrichtung verteilt angeordnet sind. Die Brenner befinden sich im montierten Zustand üblicher Weise in Aufnahmeöffnungen, die in Umfangsrichtung entlang eines Gehäuseflansches des Brennergehäuses der Turbine angeordnet sind.

Die De- und Remontage von Brennerkomponenten, beispielsweise zu Inspektions- und/oder Wartungszwecken, hat sich mit der Zeit als immer schwieriger und zeitaufwendiger erwiesen, da das Gewicht der einzelnen Brennerkomponenten immer weiter gestiegen ist. Für eine Brennerinspektion müssen mehrere volle, mitunter acht Arbeitstage veranschlagt werden.

Im Lichte des mit der De- und Remontage von Brennerkomponenten verbundenen Aufwandes sind die Bestrebungen dahin gegangen, Hilfsvorrichtungen für den Ein- und Ausbau der Brennerkomponenten bereitzustellen.

So geht aus der WO 2009/077270 A2 eine Montageanordnung zum Montieren von Brennern für Gasturbinen und/oder eines am Brenner zu montierenden oder montierten heißgasführenden Elementes hervor. Die offenbarte Montageanordnung umfasst zwei kranartige Montagevorrichtungen mit jeweils einem Säulenlift und einem an dem Säulenlift schwenkbar angeordneten Greifausleger. Für einen Montagevorgang wird beiderseitig eines mit Aufnahmeöffnungen für die Brenner versehenen Gehäuseflansches eines Brennergehäuses eine Montagevorrichtungen angeordnet und mit Hilfe der Greifausleger werden Brenner und sogenannte Übergangsstücke, die auch als "Transitions" (englisch: transition pieces) bezeichnet werden, montiert. Bei den Übergangsstücken oder Transitions handelt es sich um heißgasführende Elemente, welche den zumindest in etwa kreisförmigen Querschnitt der zylindrischen Brennraumgehäuse der Brenner in einen Querschnitt überführen, der einem Kreisringsegment entspricht.

Dabei ist an den Greifauslegern der offenbarten Montageanordnung jeweils eine Halterung angeordnet und an der Halterung ein Befestigungselement, das zum Befestigen eines Brenners oder eines heißgasführenden Elements ausgestaltet ist. Die Anordnung aus Tragelementen, Greifausleger, Halterung- und Befestigungselement stellt drei translatorische Freiheitsgrade und wenigstens zwei Freiheitsgrade der Orientierung für einen am Befestigungselement befestigten Brenner bzw. ein daran befestigtes heißgasführendes Element zur Verfügung.

Weiteren Stand der Technik bilden die Druckschriften US 6,141,862 A, EP 2 905 430 A1, US 2014/123656 A1 und US 2013/139368 A1.

Die aus dem Stand der Technik vorbekannte Montageanordnung hat sich prinzipiell bewährt. Es besteht jedoch weiterhin Bedarf an verbesserten Verfahren und Vorrichtungen, welche eine zeit- und somit kosteneffiziente De- und/oder Remontage von Brennern sowie heißgasführenden Brennerkomponenten von Gasturbinen ermöglichen.

Ausgehend von dem Stand der Technik ist es daher eine Aufgabe der vorliegenden Erfindung, ein Verfahren zur Montage und/oder Demontage von Brennern einer Gasturbine und/oder von Komponenten einer Brennkammer einer Gasturbine bereitzustellen, welches sich leicht sowie komfortabel durchführen lässt und eine besonders kurze Montage- und/oder Demontagezeit ermöglicht. Darüber hinaus ist es eine Aufgabe der Erfindung, ein System zur Durchführung des Verfahrens anzugeben.

Diese Aufgabe wird gelöst durch ein Verfahren nach Anspruch 1.

Mit anderen Worten besteht der Grundgedanke der vorliegenden Erfindung darin, einen Roboter mit einem Roboterarm, der mit einem geeigneten Adapter ausgestattet ist, für die De- und/oder Remontage von Brennern für Gasturbinen einzusetzen.

Ein Knickarmroboter hat sich dabei als besonders geeignet erwiesen, da sich die Aufnahmeöffnungen für die Brenner, die in der Regel in einem Gehäuseflansch des Brennkammer-Gehäuses vorgesehen sind, durch unterschiedliche Neigungen auszeichnen. Dies erfordert eine hohe Flexibilität bei der Positionierung der Brenner und/oder Transitions, welche insbesondere von einem Knickarmroboter gewährleistet wird. Ein Knickarmroboter zeichnet sich durch einen insbesondere an einem Standfuß gelenkig gehaltenen Knickarm aus, der zwei ebenfalls gelenkig miteinander verbundenen Armabschnitten umfasst. Der dem Standfuß näher liegende, an dem Standfuß gehaltene Armabschnitt ist dabei an dem Standfuß bevorzugt derart direkt oder indirekt, also über weitere Komponenten, befestigt, dass er in einer vertikalen Ebene schwenkbar und/oder um eine insbesondere vertikale Rotationsachse drehbar ist.

Der erfindungsgemäß zum Einsatz kommende Knickarmroboter kann sich in vorteilhafter Ausführung durch wenigstens sechs, insbesondere genau sechs Bewegungsachsen auszeichnen, also als 6-Achsen-Knickarmroboter ausgestaltet sein. Sind sechs Bewegungsachsen vorhanden, handelt es sich bevorzugt um drei Rotations- und drei Schwenkachsen.

Durch den erfindungsgemäßen Einsatz eines mit einem Brenner-Adapter versehenen Roboters kann die Montage- und/oder Demontagezeit gegenüber dem Stand der Technik deutlich reduziert werden. Durch die Steuerung des Roboters sind die Wege zu den Einbaupositionen bereits vorgegeben, daher verkürzen sich die Anfahrtszeiten der Komponenten erheblich. Es hat sich herausgestellt, dass Anfahrtszeiten von nur 2 bis 3 Minuten je zu (de)montierender Komponente möglich sind. Mittels des mit einem Brenner-Adapter versehenen Roboters können die Brenner direkt gegriffen und montiert werden. Zwischenschritte oder ein Umsetzen sind nicht erforderlich. Da die Montage und/oder Demontage nahezu vollständig bzw. vollständig automatisiert erfolgt, wird auch eine besonders hohe Sicherheit für das Bedienpersonal erreicht. Ein händisches Bewegen der schweren Brenner bzw. heißgasführenden Elemente ist nicht erforderlich.

Für einen Montage- bzw. Demontagevorgang wird der Roboter jeweils seitlich der Gasturbine positioniert. Um alle Brenner bzw. Aufnahmeöffnungen für Brenner, die in Umfangsrichtung des Gehäuseflansches verteilt sind, zu erreichen, wird insbesondere ein Roboter an verschiedenen Aufstellpositionen positioniert. Auch kann es erforderlich sein, den Roboter auf einer Seite der Gasturbine nacheinander beispielswiese an zwei verschiedenen Aufstellpositionen anzuordnen, um sämtliche Brenner bzw. Aufnahmeöffnungen in der einen Gehäuseflansch-Hälfte zu erreichen.

Dabei kann vorgesehen sein, dass der Roboter mittels eines Krans, insbesondere eines Hallenkrans an verschiedenen Aufstellpositionen neben der Gasturbine positioniert wird. Bevorzugt wird der Roboter mittels eines Krans nacheinander an zwei sich in ihrer Höhe unterscheidenden Aufstellpositionen auf der einen Seite der Gasturbine und an zwei sich in ihrer Höhe unterscheidenden Aufstellpositionen auf der gegenüberliegenden Seite der Gasturbine positioniert. Von einer jeweils unteren Aufstellposition sind dann insbesondere die Brenner bzw. Aufnahmeöffnungen in der unteren Hälfte des Gehäuseflansches erreichbar und von einer jeweils oberen Aufstellposition die Brenner bzw. Aufnahmeöffnungen in der oberen Hälfte des Gehäuseflansches. Je nachdem, welche Achshöhe die Gasturbine und/oder welchen Durchmesser die ringförmige Brenneranordnung hat, werden die Aufstellpositionen und insbesondere die Höhen der Aufstellpositionen gewählt.

Auch kann ein geeignetes Gestell oder können mehrere geeignete Gestelle zum Einsatz kommen, auf denen der Roboter an gewünschten Aufstellorten, insbesondere in der jeweils gewünschten bzw. erforderlichen Höhe sicher gehalten wird. In vorteilhafter Ausführungsform des erfindungsgemäßen Verfahrens wird der Roboter auf wenigstens einem an dem Fundament für die Gasturbine, insbesondere an wenigstens zwei Fundamentblöcken fixierten Gestell bereitgestellt.

Es ist auch möglich, dass an dem Fundament der Gasturbine fixierte, insbesondere in das Fundament integrierte Befestigungsmittel herangezogen werden, um den Roboter an einer gewünschten Aufstellposition lösbar zu fixieren.

Gemäß einer Ausführungsform des erfindungsgemäßen Verfahrens ist ferner vorgehen, dass
- im ersten Schritt ein Roboter mit einem Brenner-Adapter bereitgestellt wird, der ausgebildet ist, um denjenigen axialen Endbereich eines Brenners aufzunehmen, der im montierten Zustand des Brenners aus einer in einem Gehäuseflansch eines Brennkammergehäuses für die Aufnahme des Brenners vorgesehene Aufnahmeöffnung vorsteht, und
- im zweiten Schritt der Roboterarm derart positioniert wird, dass der Brenner-Adapter den im montierten Zustand vorstehenden axialen Endbereich des Brenners aufnimmt.

Den im montierten Zustand aus einer Aufnahmeöffnung vorstehenden Abschnitt eines Brenners kann der erfindungsgemäß zum Einsatz kommende Brenner-Adapter durch entsprechende Positionierung des Roboterarms übergreifen und eine lösbare Befestigung des Brenners an dem Brenner-Adapter über die hierzu vorgesehenen Mittel kann an dem vorstehenden Abschnitt erfolgen. In der Regel steht zumindest ein Flansch eines Brenners aus der jeweiligen Aufnahmeöffnung vor, über welchen der Brenner im montierten Zustand in der Einbauposition fixiert ist, insbesondere mittels Schrauben, die durch Durchgangsbohrungen in dem Flansch in Gewindebohrungen in dem die Aufnahmeöffnungen aufweisenden Gehäuseflansch des Brennkammergehäuses der Gasturbine eingeschraubt sind. Der Brenner-Adapter ist bevorzugt derart ausgebildet, dass er den vorstehenden Flansch eines Brenners im Bereich dessen Mantelfläche formschlüssig umgreift. Der Brenner-Adapter umfasst einen Aufnahmering, dessen Innendurchmesser an den Außendurchmesser eines Flanschs der zu montierenden und/oder zu demontierenden Brenner, welcher im montierten Zustand eines Brenners aus einer in dem Brennkammergehäuse einer Gasturbine vorgesehenen Aufnahmeöffnung vorsteht, angepasst ist. Der Brenner-Adapter kann dann für eine Montage bzw. Demontage eines Brenners derart positioniert werden, dass der Aufnahmering den - auch im montierten Zustand des Brenners zugänglichen - Flansch des Brenners formschlüssig umgreift und der Flansch des Brenners kann an dem Aufnahmering befestigt werden.

Entsprechend des erfindungsgemäßen Verfahrens ist vorgesehen, dass ein Roboter mit einem Roboterarm bereitgestellt wird, an dessen freiem Ende ein im Folgenden noch weiter beschriebener erfindungsgemäßer Brenner-Adapter lösbar befestigt ist, wobei der Innendurchmesser des Aufnahmerings des Brenner-Adapters an den Außendurchmesser eines im montierten Zustand eines Brenners aus einer in einem Gehäuseflansch eines Brennkammergehäuses für die Aufnahme des Brenners vorgesehene Aufnahmeöffnung vorstehenden Flansches eines Brenners angepasst ist. Eine lösbare Befestigung des Brenners an dem Brenner-Adapter, insbesondere Aufnahmering erfolgt in vorteilhafter Ausführung über Schraubverbindungen.

Das erfindungsgemäße Verfahren zeichnet sich ferner dadurch aus, dass
- an dem Brenner-Adapter, insbesondere an dessen von dem freien Ende des Roboterarms abgewandten Seite, ein Transition-Adapter, der Mittel aufweist, um ein Übergangsstück der Brennkammer, welches im montierten Zustand insbesondere hinter einem Brenner sitzt, lösbar an dem Transition-Adapter zu befestigen, lösbar befestigt wird,
- der Roboterarm derart positioniert wird, dass der Transition-Adapter an einem Übergangsstück in Anlage kommt,
- das Übergangstück an dem Transition-Adapter lösbar befestigt wird,
- das Übergangsstück mittels des Roboters aus einer Einbauposition in dem Gehäuse der Brennkammer entfernt oder in eine Einbauposition in dem Gehäuse der Brennkammer gebracht wird, und
- die Befestigung des Übergangsstücks an dem Transition-Adapter gelöst wird.

Nachdem einer oder mehrere, gegebenenfalls alle Brenner aus ihren Einbaupositionen in dem Brennkammer-Gehäuse entfernt wurden bzw. bevor Brenner eingebaut werden, sind die sogenannten Übergangsstücke, die auch als Transitions bezeichnet werden, und im montierten Zustand in der Regel hinter den Brennern sitzen, von außen über Aufnahmeöffnungen in dem Gehäuseflansch eines Brennkammergehäuses zugänglich.

Gemäß dieser Ausführungsform des erfindungsgemäßen Verfahrens wird auch eine Transition bzw. werden auch mehrere Transitions unter Verwendung eines Roboters mit Roboterarm aus ihrer (jeweiligen) Einbauposition entfernt bzw. in diese gebracht. Hierzu kommt erfindungsgemäß ein weiterer Adapter, konkret eine Transition-Adapter zum Einsatz, der an dem am freien Ende des Roboterarms befestigten Brenner-Adapter, insbesondere an dessen von dem freien Ende des Roboterarms abgewandten Seite, vorübergehend befestigt wird. Der Transition-Adapter weist Mittel auf, um ein Übergangsstück für dessen Montage bzw. Demontage lösbar an dem Transition-Adapter zu befestigen.

Das erfindungsgemäße Verfahren zeichnet sich in weiterer vorteilhafter Ausführungsform dadurch aus, dass ein Roboter bereitgestellt wird, der aufgrund seiner Ausgestaltung und Dimensionierung maximal drei Mal versetzt werden muss, um sämtliche Brenner einer Gasturbine mit ringförmiger Brennkammer zu erreichen.

Ein weiterer Gegenstand der vorliegenden Erfindung ist ein Adaptersystem nach Anspruch 8.

Das Adaptersystem umfasst einen erfindungsgemäßen Brenner-Adapter mit einem kreisförmigen Aufnahmering und einen erfindungsgemäßen Transition-Adapter mit einer runden Grundplatte, wobei der Innendurchmesser des Aufnahmerings des Brenner-Adapters und der Außendurchmesser der Grundplatte des Transition-Adapters aneinander angepasst sind.
Der Brenner-Adapter ist ausgebildet, um einen axialen Endbereich eines Brenners für eine Gasturbine aufzunehmen, und hat eine Fixierplatte, die Mittel zur lösbaren Befestigung an dem freien Ende eines Roboterarms, insbesondere eine Mehrzahl von Gewinde- und/oder Durchgangsbohrungen, aufweist, und einen vor der Fixierplatte und beabstandet zu dieser angeordneten Aufnahmering, der sich zumindest im Wesentlichen parallel zu der Fixierplatte erstreckt und an dieser befestigt ist, wobei in dem Aufnahmering in Umfangsrichtung beabstandete radiale Durchgangs- und/oder Gewindebohrungen vorgesehen sind. Die Durchgangs- und/oder Gewindebohrungen erstrecken sich insbesondere von der äußeren zur inneren Mantelseite des Aufnahmeringes. Ein auf diese Weise ausgestalteter Brenner-Adapter hat sich als besonders geeignet erwiesen, um im Rahmen des erfindungsgemäßen Verfahrens für die Montage und/oder Demontage von Brennern zum Einsatz zu kommen.

Der Innendurchmesser des Aufnahmerings ist bevorzugt an den Außendurchmesser eines Flanschs der zu montierenden und/oder zu demontierenden Brenner, welcher im montierten Zustand eines Brenners aus einer in dem Brennkammergehäuse einer Gasturbine vorgesehenen Aufnahmeöffnung vorsteht, angepasst.

In Weiterbildung zeichnet sich der erfindungsgemäße Brenner-Adapter dadurch aus, dass die Fixierplatte kreisrund und die Fixierplatte und der Aufnahmering koaxial zueinander angeordnet sind und/oder dass der Aufnahmering einen größeren Durchmesser als die Fixierplatte aufweist.

Alternativ oder zusätzlich kann vorgesehen sein, dass der Aufnahmering über eine Mehrzahl von Verbindungsstegen an der Fixierplatte befestigt ist, die insbesondere in Umfangsrichtung beabstandete Bereiche an der Fixierplatte mit in Umfangsrichtung beabstandeten Bereichen an dem Aufnahmering verbinden.

Der Transition-Adapter weist Mittel auf, um ein Übergangsstück der Brennkammer, welches im montierten Zustand insbesondere hinter einem Brenner sitzt, lösbar an dem Transition-Adapter zu befestigen, mit einer insbesondere runden Grundplatte und mit fünf an der Grundplatte befestigten und von dieser zumindest im Wesentlichen orthogonal abragenden Führungsstangen, die jeweils mehrere zehn Zentimeter, insbesondere wenigstens 50 cm lang sind, und mit einem entlang der Führungsstange bewegbar gehaltenen Halteschlitten, welcher Mittel zur lösbaren Befestigung eines Übergangsstücks an dem Halteschlitten aufweist.

Der Halteschlitten ist insbesondere an allen Führungsstangen bewegbar gehalten. Für die Bewegung des Halteschlittens entlang der Führungsstangen umfasst ferner bevorzugt wenigstens eine der Führungsstangen eine Spindel bzw. wird durch eine solche gebildet. Beispielsweise kann eine Führungsstange, die eine Spindel umfasst bzw. durch eine solche gebildet wird an zentraler Position der Grundplatte an der Grundplatte befestigt sein und die weiteren Führungsstangen sind - insbesondere in Umfangsrichtung der Grundplatte äquidistant beabstandet - um diese herum angeordnet.

In der Mantelfläche der Grundplatte des Transition-Adapters sind radiale Gewindebohrungen vorgesehen, die zu den Durchgangsbohrungen in dem Aufnahmering des Brenner-Adapters korrespondieren, so dass die Grundplatte im innerhalb des Aufnahmerings angeordneten Zustand mit dem Aufnahmering verschraubt werden kann, um den Transition-Adapter lösbar an dem Brenner-Adapter zu fixieren.

Ein weiterer Gegenstand der vorliegenden Erfindung ist eine Montagevorrichtung nach Anspruch 10. Die Montagevorrichtung umfasst vorzugsweise einen Knickarmroboter mit einem Roboterarm sowie ein erfindungsgemäßes Adaptersystem. Der Brenner-Adapter ist an dem freien Ende des Roboterarms insbesondere lösbar befestigt oder befestigbar.

Die erfindungsgemäße Montagevorrichtung umfasst einen erfindungsgemäßen Transition-Adapter, welcher an dem Brenner-Adapter, insbesondere an dessen von dem freien Ende des Roboterarms abgewandten Seite, lösbar befestigt oder befestigbar ist, wobei der Brenner-Adapter einen kreisförmigen Aufnahmering und der Transition-Adapter eine runde Grundplatte aufweist, und wobei der Innendurchmesser des Aufnahmerings des Brenner-Adapters und der Außendurchmesser der Grundplatte des Transition-Adapters aneinander angepasst sind.

In Weiterbildung umfasst die Vorrichtung ferner ein Gestell, welches Mittel aufweist, um an einem Fundament einer Gasturbine, insbesondere an zwei beabstandet zueinander angeordneten Fundamentblöcken einer Gasturbine fixiert zu werden sowie Mittel, über die der Roboter, insbesondere ein Standfuß des Roboters an dem Gestell befestigt oder befestigbar ist.

Dann kann vorgesehen sein, dass das Gestell vier Doppel-T-Träger und vier Stützelemente, von denen jeweils zwei Stützelemente zwei zueinander beabstandete und bevorzugt zumindest im Wesentlichen parallel zueinander orientierte Doppel-T-Träger miteinander verbinden, und vier als Anker dienende Spannseile, die jeweils zwei axiale Endbereiche von zwei nicht über Stützelemente verbundenen Doppel-T-Trägern miteinander verbinden, sowie zwei Trägerplattformen für den Roboter, die bevorzugt jeweils an dem oberen Ende eines der Stützelemente angeordnet sind und Mittel zur Befestigung des Roboters, insbesondere eines Standfußes des Roboters aufweisen, umfasst. Ein auf diese Weise ausgebildetes Gestell hat sich als besonders geeignet erwiesen, um den Roboter insbesondere in verschiedenen Aufstellpositionen seitlich der Gasturbine sicher zu halten. Das Gestell wird dann bevorzugt auf die vorstehend beschrieben Weise an dem Fundament einer Gasturbine, insbesondere an zwei Fundamentblöcken befestigt, indem die Doppel-T-Träger mittels der Spannseile gegen die Fundamentblöcke verspannt werden.

Im montierten Zustand des Gestells sind dann bevorzugt alle vier Doppel-T-Träger parallel zueinander angeordnet und spannen einen Quader auf. Das Gestell wird bevorzugt derart an zwei Fundamentblöcken befestigt, dass sich die Spannseile im montierten Zustand orthogonal zu den Doppel-T-Trägern, insbesondere durch einen Zwischenraum zwischen den beiden Fundamentblöcken erstrecken, und jeweils zwei einander gegenüberliegende axiale Endbereiche von zwei zu beiden Seiten der Fundamentblöcke angeordneten Doppel-T-Trägern verbinden. Die Trägerplattformen für den Roboter weisen bevorzugt eine Mehrzahl von Gewinde- und/oder Durchgangsbohrungen auf, die zu Gewinde- und/oder Durchgangsbohrungen in dem Standfuß des Roboters korrespondierend angeordnet sind, so dass der Roboter mittels Schrauben an einer Trägerplattform befestigbar ist. Die beiden Trägerplattformen definieren jeweils eine Aufstellposition des Roboters. Das Gestell kann darüber hinaus eine Erweiterung umfassen, die derart ausgebildet ist, dass der Roboter in zwei weiteren Aufstellpositionen oberhalb der Trägerplatten, jeweils insbesondere mehrere, beispielsweise drei Meter oberhalb der Trägerplattformen, positioniert und befestigt werden kann.

Im Rahmen des erfindungsgemäßen Verfahrens wird der Roboter bevorzugt auf einem auf die vorstehend beschriebene Weise ausgestalteten Gestell bereitgestellt. Das Gestell eignet sich insbesondere, um den Roboter an bereits fertiggestellten Gasturbinen erfindungsgemäß für die Montage und/oder Demontage von Brennern und/oder Transitions zu verwenden.

Zu der Erfindung gehört ferner eine Anordnung umfassend eine Gasturbine, ein Fundament, auf welchem die Gasturbine angeordnet ist, und eine erfindungsgemäße Montagevorrichtung, wobei das Fundament zwei voneinander beabstandete Fundamentblöcke umfasst, die bevorzugt integral mit dem Untergrund ausgebildet sind, und wobei einer der Fundamentblöcke einen ersten, den Verdichter umfassenden Teil der Gasturbine und der andere Fundamentblock einen zweiten, die Brennkammer umfassenden Teil der Gasturbine trägt, und wobei die Fundamentblöcke als Widerlager zur lösbaren Befestigung des Gestells für den Roboter dienen. Das Gestell ist dann insbesondere auf die vorstehend beschrieben Weise lösbar an den beiden als Widerlager dienenden Fundamentblöcken befestigt.

Alternativ oder zusätzlich zu einem Gestell, welches insbesondere auf die vorstehend beschrieben Weise lösbar an den beiden als Widerlager dienenden Fundamentblöcken befestigt wird, kann die Anordnung wenigstens eine, insbesondere zwei Halteplatten umfassen, die an dem Fundament der Gasturbine, bevorzugt an wenigstens einem Fundamentblock der Gasturbine befestigt, insbesondere in das Fundament bzw. einen Fundamentblock eingelassen, beispielsweise eingegossen sind. Die Halteplatte bzw. die Halteplatten der Anordnung weisen dann insbesondere jeweils Gewindebohrungen auf, deren Bohrmuster zu demjenigen von Durchgangsbohrungen in dem Standfuß des Roboters korrespondieren, so dass der Roboter an den Halteplatten und somit dem Fundament direkt festgeschraubt werden kann. Die Anordnung kann dann in bevorzugter Ausgestaltung Erweiterungen, beispielsweise Verlängerungssockel umfassen, die an den Halteplatten lösbar insbesondere mittels Schrauben fixiert werden und an welchen der Roboter, insbesondere dessen Standfuß, lösbar fixiert, insbesondere festgeschraubt werden kann.

Während das vorstehend beschriebene Gestell insbesondere zur Positionierung und Befestigung des Roboters an bestehenden Kraftwerken zum Einsatz kommen kann, können noch zu errichtende Kraftwerke direkt mit Mitteln für die lösbare Fixierung des Roboters an gewünschten bzw. erforderlichen Aufstellpositionen ausgestattet werden, insbesondere mit wenigstens einer, bevorzugt mehreren vorstehend beschriebenen Halteplatten.

Im Rahmen des erfindungsgemäßen Verfahrens kommt insbesondere die vorstehend beschriebene Anordnung zu Einsatz, wobei der Roboter dann auf dem Gestell oder wenigstens einer an dem Fundament befestigten Halteplatte in einer Aufstellposition bereitgestellt wird.

Schließlich ist ein Gegenstand der Erfindung die Verwendung eines Roboters mit einem Roboterarm, insbesondere eines Knickarmroboters, für die Montage und/oder Demontage von Übergangsstücken einer Brennkammer einer Gasturbine mit insbesondere ringförmiger Brennkammer. Für die Montage und/oder Demontage von Übergangsstücken einer Brennkammer einer Gasturbine mit insbesondere ringförmiger Brennkammer wird ein Roboter verwendet, an dessen freiem Roboterarm-Ende ein Brenner-Adapter bevorzugt lösbar befestigt ist, der ausgestaltet ist, um einen axialen Endbereich eines Brenner für eine Gasturbine aufzunehmen, und der Mittel aufweist, um den Brenner im aufgenommenen Zustand lösbar an dem Adapter zu befestigen, wobei an dem Brenner-Adapter, insbesondere an dessen von dem freien Ende des Roboterarms abgewandten Seite, ein Transition-Adapter befestigt ist, der Mittel aufweist, um ein Übergangsstück der Brennkammer, welches im montierten Zustand insbesondere hinter einem Brenner sitzt, lösbar an dem Transition-Adapter zu befestigen.

Bei dem im Rahmen des erfindungsgemäßen Verfahrens und der erfindungsgemäßen Verwendung sowie bei der erfindungsgemäßen Montagevorrichtung und Anordnung zum Einsatz kommenden Roboter handelt es sich bevorzugt um einen frei programmierbaren Roboter und/oder einen Roboter mit wenigstens sechs, insbesondere genau sechs Bewegungsachsen. Als geeignet hat sich beispielsweise der 6-Achsen-Knickarmroboter Roboter der Typenbezeichnung MG10HL von Kawasaki erwiesen. Der verwendete Roboter muss sich durch eine ausreichende Tragkraft auszeichnen, um die schweren Brenner, von denen jeder mitunter mehrere hundert Kilogramm, beispielsweise bis zu 600 Kilogramm wiegt, sicher bewegen zu können.

Weitere Merkmale und Vorteile der vorliegenden Erfindung werden anhand der nachfolgenden Beschreibung von einer Ausführungsform eines Verfahrens und einer Montagevorrichtung gemäß der vorliegenden Erfindung unter Bezugnahme auf die beiliegende Zeichnung deutlich. Darin ist
- Figur 1: eine perspektivische Ansicht eines axialen Endbereiches eines Gehäuses einer Brennkammer einer Gasturbine;
- Figur 2: eine schematische Ansicht eines 6-Achsen-Knickarmroboters und einem an dem freien Ende des Roboterarms befestigten Brenner-Adapter;
- Figur 3: eine perspektivische, vergrößerte Ansicht des Brenner-Adapters aus Figur 2;
- Figur 4: eine perspektivische, vergrößerte Ansicht des Brenner-Adapters aus Figur 2 und 3 mit daran befestigtem Transition-Adapter;
- Figur 5: eine perspektivische Ansicht des Brenner-Adapters aus Figur 2 und 3 in am Roboterarm befestigtem Zustand und mit daran befestigtem Brenner;
- Figur 6: eine perspektivische Ansicht des Brenner-Adapters aus Figur 5 mit daran befestigtem Transition-Adapter sowie an dem Transition-Adapter befestigtem Übergangsstück;
- Figur 7: eine perspektivische Ansicht eines Gestells für den Roboter in einem an zwei Fundamentblöcken befestigten Zustand;
- Figur 8: eine perspektivische Ansicht des Gestells aus Figur 7 von der anderen Seite;
- Figur 9: eine Seitenansicht des Gestells aus den Figuren 7 und 8 mit daran befestigtem Knickarmroboter; und
- Figur 10: eine Aufsicht auf das Gestell aus den Figuren 7 bis 9.

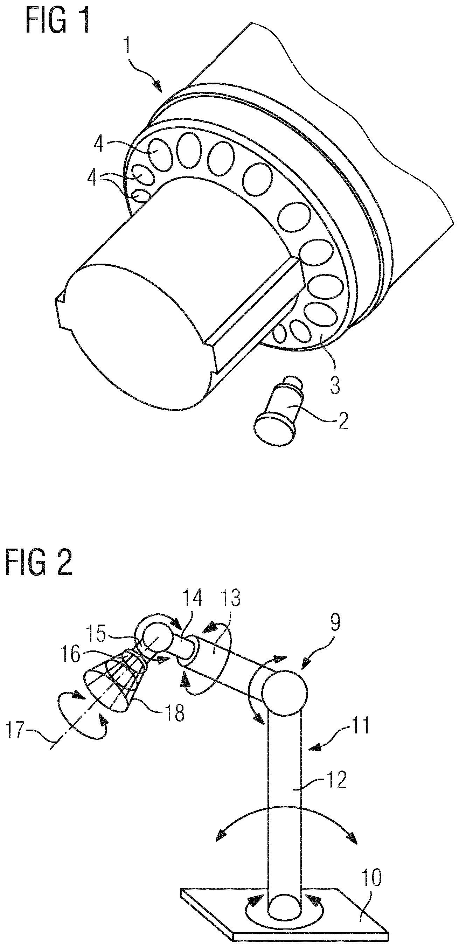

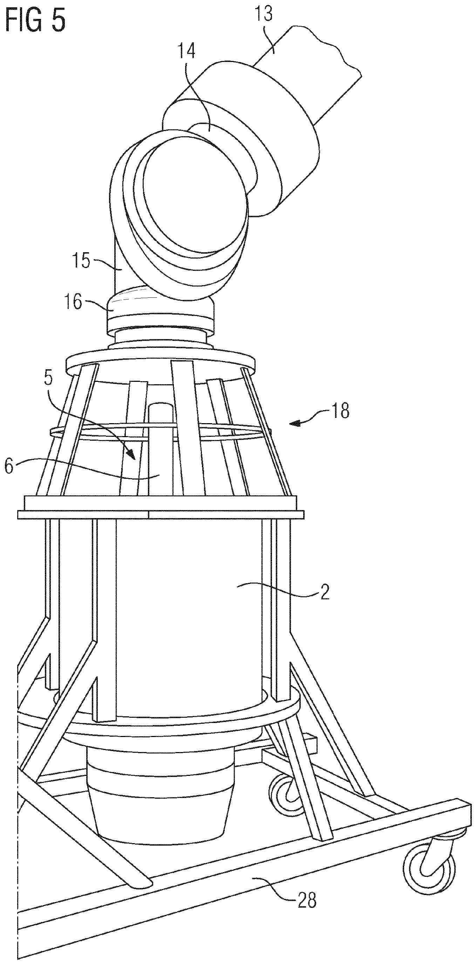

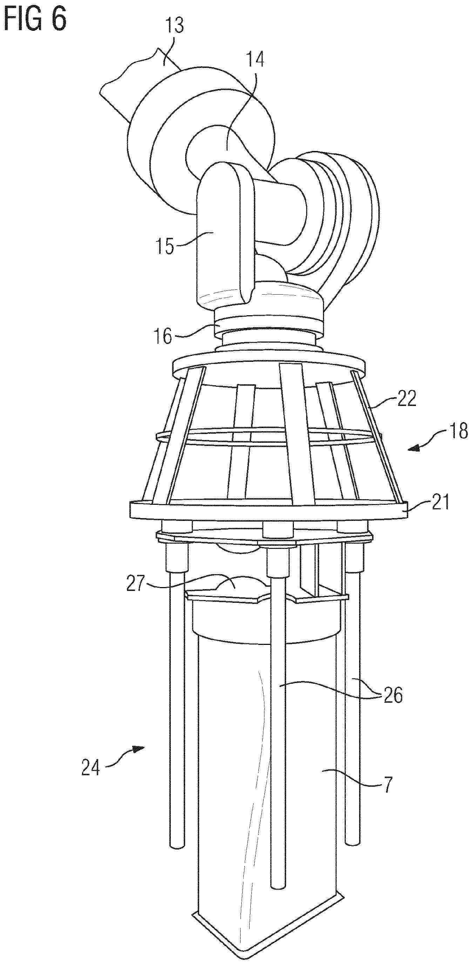

Die Figur 1 zeigt in perspektivischer Darstellung den axialen Endbereich des Gehäuses 1 der ringförmigen Brennkammer einer in der Figur nicht weiter dargestellten Gasturbine. Zu der Brennkammer gehört eine ringförmige Anordnung einer Mehrzahl von Brennern 2, die im montierten Zustand an dem Eintritt des innerhalb des Gehäuses 1 befindlichen ringförmigen Brennraums in Umfangsrichtung verteilt angeordnet sind. Für die Brenner 2 ist in dem Gehäuse 1, konkret in einem Gehäuseflansch 3 des Gehäuses 1, eine der Anzahl der Brenner 2 der Brenneranordnung entsprechende Anzahl von Aufnahmeöffnungen 4 vorgesehen. Die Aufnahmeöffnungen sind, wie in Figur 1 erkennbar, in Umfangsrichtung des Gehäuseflansches 3 äquidistant beabstandet angeordnet. Von den Brennern 2 ist in der Figur 1, welche das Brennkammergehäuse 1 mit herausgenommenen Brennern 2 zeigt, nur ein herausgenommener Brenner 2 beispielhaft gezeigt. Ein Brenner 2 im ausgebauten Zustand kann auch der Figur 5 entnommen werden. Im montierten Zustand sitzt in jeder Aufnahmeöffnung 4 ein Brenner 2, wobei jeweils ein axialer Endbereich 5 der Brenner 2, welcher einen Flansch des Brenners 2 sowie von diesem orthogonal abragende Anschlüsse 6 umfasst, die in Figur 5 erkennbar sind, aus der jeweiligen Aufnahmeöffnung 4 vorsteht. Im montierten Zustand in axialer Richtung hinter jedem Brenner 2 sitzt ein auch als Transition bezeichnetes Übergangsstück 7, welches ein heißgasführendes Element ist, das den zumindest in etwa kreisförmigen Querschnitt der zylindrischen Brennraumgehäuse der Brenner 2 in einen Querschnitt überführt, der einem Kreisringsegment entspricht. Ein Übergangsstück 7 im ausgebauten Zustand kann der Figur 6 entnommen werden.

Die Montage und/oder Demontage von den Brenner 2 und Übergangsstücken 7 der Gasturbine stellt sich schwierig dar, da die Brenner 2 und Übergangsstücke 7 ein beachtliches Gewicht aufweisen. Ein einzelner Brenner 2 wiegt mitunter mehrere hundert Kilogramm. Weiterhin problematisch ist, dass sich die Aufnahmeöffnungen 4, wie in Figur 1 erkennbar, durch unterschiedliche Neigungen auszeichnen, wobei die Montage bzw. Demontage auch von schräg unten erfolgen muss.

Für eine komfortable und sichere Montage und/oder Demontage der Brenner 2 und Übergangsstücke 7 kommt eine erfindungsgemäße Montagevorrichtung 8 zum Einsatz. Die Montagevorrichtung 8 umfasst einen 6-Achsen-Knickarmroboter 9, der einen Standfuß 10, ein an dem Standfuß 10 drehbar sowie in einer Ebene schwenkbar gehaltenen Knickarm 11 umfasst. Der Roboter 9 kann der Figur 2 entnommen werden. Der Knickarm 11 ist in an sich bekannter Weise in zwei gelenkig miteinander verbundene Armabschnitte 12, 13 unterteilt, die in einer Ebene gegeneinander schwenkbar sind. Der Roboter 9 umfasst weiterhin ein an dem freien Ende des Knickarms 11 vorgesehenes Ausrichtelement 14, dass an dem Knickarm 11, derart befestigt ist, dass es um die zentrale Längsachse des zweiten Abschnittes 13 des Knickarms 11 rotiert werden kann, ein an dem ersten Ausrichtelement 14 in einer Ebene schwenkbar gehaltenes zweites Ausrichtelement 15 und eine Befestigungsplatte 16, die derart an dem zweiten Ausrichtelement 15 befestigt ist, dass sie um eine orthogonal auf ihr stehende Achse 17 rotiert werden kann. Die Befestigungsplatte 16 weist eine Mehrzahl von in den Figuren nicht erkennbaren Gewindebohrungen auf, die es ermöglichen, Bearbeitungswerkzeuge mit der Befestigungsplatte 16 zu verbinden.

Der 6-Achsen-Knickarmroboter 9 des dargestellten Ausführungsbeispiels zeichnet sich im Ergebnis durch drei Rotations- und drei Neigungsachsen aus, die in Figur 2 durch entsprechende Pfeile angedeutet sind. Bei dem dargestellten Ausführungsbeispiel handelt es sich bei dem Roboter 9 um das Modell mit Typenbezeichnung MG10HL von Kawasaki, welches in den Figuren stark vereinfacht dargestellt ist. Dieser 6-Achsen-Knickarmroboter 9 ist frei programmierbar.

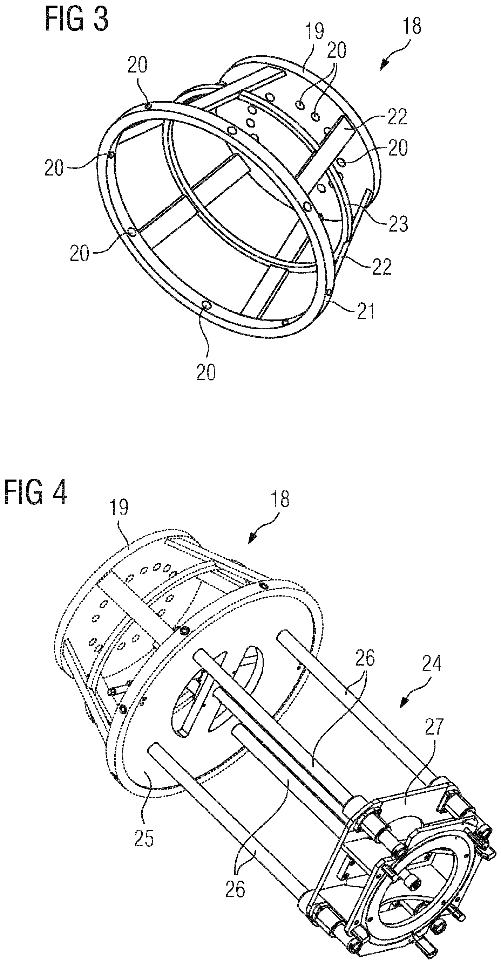

Erfindungsgemäß ist der Roboter 9 nicht, wie aus dem Stand der Technik vorbekannt, mit einem Bearbeitungswerkzeug versehen, sondern er an dem freien Ende des Knickarms 11 ist - indirekt über die beiden Ausrichtelemente 14, 15 und die Befestigungsplatte 16 - ein Brenner-Adapter 18 der Montagevorrichtung 8 befestigt, welcher in vergrößerter Darstellung der Figur 3 entnommen werden kann. Mit Hilfe des Brenner-Adapters 18 können erfindungsgemäß Brenner 2 mittels des Roboters 9 montiert sowie demontiert werden. Der Brenner-Adapter 18 ist ausgebildet, um einen axialen Endbereich 5 eines Brenners 2, konkret denjenigen axialen Endbereich 5 eines Brenners, welcher im montierten Zustand aus einer Aufnahmeöffnung 4 vorsteht, also einen Flansch eines Brenners 2 sowie von diesem orthogonal abragende Anschlüsse 6, aufzunehmen.

Zu seiner Befestigung an dem Roboter 9 umfasst der erfindungsgemäße Brenner-Adapter 18 eine kreisrunde Fixierplatte 19, die Mittel zur lösbaren Befestigung an der Befestigungsplatte 16, konkret eine Mehrzahl von Durchgangsbohrungen 20 aufweist. Das Bohrmuster der Durchgangsbohrungen 20 ist an das Bohrmuster der in der Befestigungsplatte 16 des Roboters 9 vorgesehen Gewindebohrungen angepasst, so dass die Fixierplatte 19 mittels in den Figuren nicht dargestellten bzw. nicht erkennbaren Schrauben an der Befestigungsplatte 16 des Roboters 9 fixiert werden kann. Der Brenner-Adapter 18 im montierten, also an dem Roboter 9 befestigten Zustand kann den Figuren 5 und 6 entnommen werden.

Der Brenner-Adapter 18 umfasst weiterhin einen vor der Fixierplatte 19 und beabstandet zu dieser angeordneten kreisförmigen Aufnahmering 21, der sich zumindest im Wesentlichen parallel zu der Fixierplatte 19 erstreckt und an dieser befestigt ist. Der Aufnahmering 21 ist, wie insbesondere in der Figur 3 erkennbar, über sechs Verbindungsstege 22, die in Umfangsrichtung beabstandete Bereiche an der Fixierplatte 19 mit in Umfangsrichtung beabstandeten Bereichen an dem Aufnahmering 21 verbinden, an der Fixierplatte 19 befestigt. Über einen zwischen der Fixierplatte 19 und dem Aufnahmering 21 angeordneten Verstärkungsring 23, welcher mit jedem der Verbindungsstege 22 verbunden ist, wird eine erhöhte Stabilität des Brenner-Adapters 18 erzielt. In dem Aufnahmering 21 sind in Umfangsrichtung beabstandete Durchgangsbohrungen 20 vorgesehen, die sich von der äußeren zur inneren Mantelseite des Aufnahmeringes 21 erstrecken. Die Durchgangsbohrungen 20 in dem Aufnahmering 21 dienen der Befestigung eines Brenners 2 an dem Aufnahmering 21. Der Aufnahmering 21 weist einen größeren Durchmesser auf als die Fixierplatte 19 und ist koaxial zu dieser angeordnet. Der Innendurchmesser des Aufnahmerings 21 des Brenner-Adapters 18 entspricht dem Außendurchmesser eines im montierten Zustand eines Brenners 2 aus der Aufnahmeöffnung 4 vorstehenden Flanschs des Brenners 2, so dass der Aufnahmering 21 den Flansch formschlüssig umgreifen kann.

Neben dem Roboter 9 und dem Brenner-Adapter 18 umfasst die erfindungsgemäße Montagevorrichtung 8 weiterhin einen Transition-Adapter 24 für die Montage und/oder Demontage von Übergangsstücken 7, welcher insbesondere der Figur 4 entnommen werden kann.

Der Transition-Adapter 24 weist eine runden Grundplatte 25 auf, in deren Mantelfläche eine Mehrzahl von in Umfangsrichtung beabstandeten radialen Gewindebohrungen vorgesehen sind, die zu den Durchgangsbohrungen 20 in dem Aufnahmering 21 des Brenner-Adapters 18 korrespondieren, so dass die Grundplatte 25 im innerhalb des Aufnahmerings 21 angeordneten Zustand mit dem Aufnahmering 21 verschraubt werden kann, um den Transition-Adapter 24 lösbar an dem Brenner-Adapter 18 zu fixieren. Weiterhin umfasst der Transition-Adapter 24 fünf an der Grundplatte 25 befestigte und von dieser zumindest im Wesentlichen orthogonal abragenden Führungsstangen 26, die jeweils mehrere zehn Zentimeter, vorliegend konkret 1000 mm lang sind. Dabei ist wie in Figur 4 erkennbar, eine Führungsstange 26, die vorliegend durch eine Spindel gebildet wird, an zentraler Position der Grundplatte 25 befestigt und weitere vier Führungsstangen 26 sind um diese herum angeordnet. Teil des Transition-Adapters 24 ist ferner ein entlang der Führungsstangen 26 bewegbar gehaltener Halteschlitten 27, welcher Mittel zur lösbaren Befestigung eines Übergangsstücks 7 an dem Halteschlitten 27 aufweist. Die Bewegung des Halteschlittens 27 wird vorliegend über die zentrale, durch eine Spindel gebildete Führungsstange 26 bewirkt. Der Verfahrweg des Halteschlittens 27 beläuft sich bei dem dargestellten Ausführungsbeispiel auf gute 800 mm. Die Mittel zur lösbaren Befestigung eines Übergangsstücks 7 umfassen bei dem dargestellten Ausführungsbeispiel zwei Fassstücke, die in Haltebögen eingesetzt werden, von denen an jedem Übergangsstück 7 außenseitig zwei Stück in Umfangsrichtung um etwa 130° versetzt zueinander und nahe des in Figur 6 nach oben weisenden axialen Endes des Übergangsstücks 7 vorgesehen sind. Die Haltebögen dienen der Fixierung der Übergangsstücke 7 in ihrer Einbauposition, sind als ohnehin an den Übergangsstücken 7. In dem in die Haltebögen eingesetzten Zustand werden die Fassstücke an dem Halteschlitten 27 festgeschraubt, so dass das Übergangsstück 7 an dem Halteschlitten 27 fixiert ist und sich während der Beförderung mittels des Roboters 9 nicht von dem Halteschlitten 27 lösen kann.

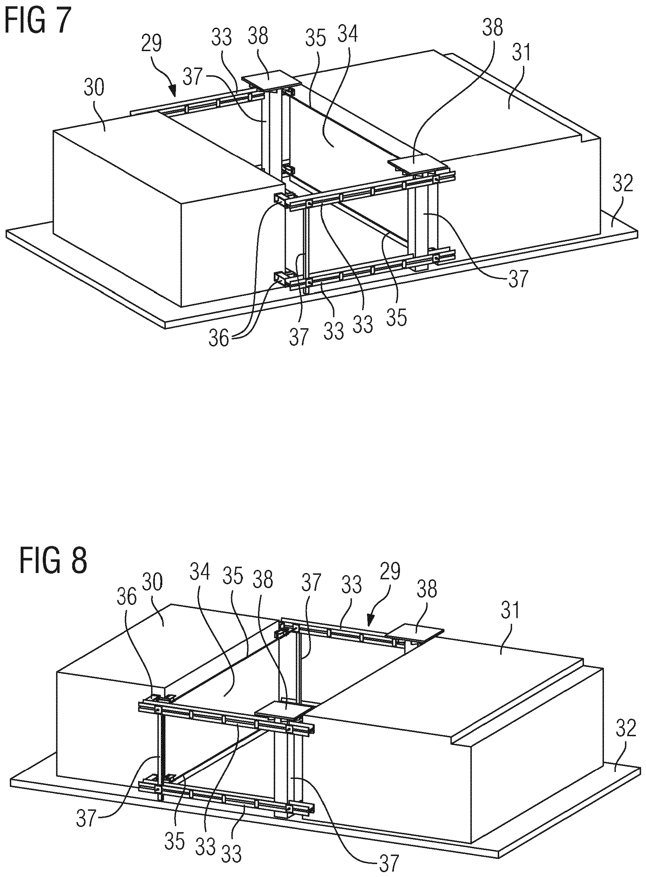

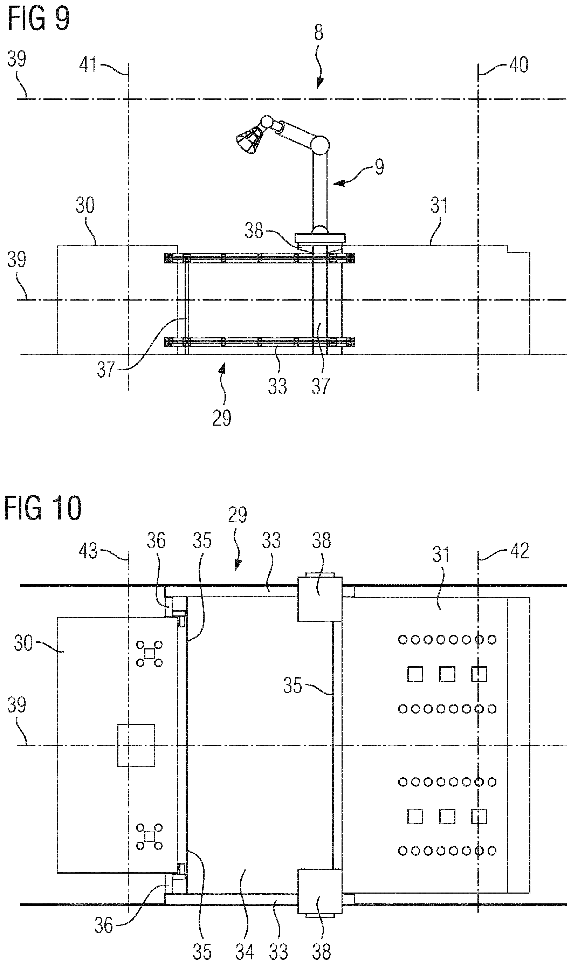

Der Roboter 9, konkret dessen Standfuß 10 ist bei dem dargestellten Ausführungsbeispiel an einem Gestell 29 der Montagevorrichtung 8 gehalten, welches der Figur 9 mit daran befestigtem Roboter 9 und den Figuren 7, 8 und 10 ohne Roboter 9 entnommen werden. Es sei angemerkt, dass in der Figur 9 der Transition-Adapter 24 der Montagevorrichtung 8 nicht dargestellt ist.

Das Gestell 29 ist an dem Fundament der in den Figuren 7 bis 10 nicht dargestellten Gasturbine befestigt, konkret an einem die Turbine tragenden vorderen Fundamentblock 30 und einem in axialer Richtung versetzt zu diesem angeordneten, den Verdichter tragenden hinteren Fundamentblock 31, die beide integral mit einer Fundamentplatte 32 ausgebildet sind. Das Gestell 29 umfasst vier parallel zueinander angeordnete Doppel-T-Träger 33, die sich seitlich des Zwischenraums 34 zwischen den beiden Fundamentblöcken 30, 31 erstrecken. Von jedem Doppel-T-Träger 33 liegt eine axialer Endbereich neben dem vorderen 30 und ein axialer Endbereich neben dem hinteren Fundamentblock 31. Die Doppel-T-Träger 33 sind an den beiden Fundamentblöcken 30, 31 mittels vier als Anker dienender Spannseile 35 fixiert, konkret gegen die Fundamentblöcke 30, 31, die im montierten Zustand des Gestells 29 als Widerlager dienen, verspannt. Die Spannseile 35 erstrecken sich im montierten Zustand orthogonal zu den Doppel-T-Trägern 33 und verbinden jeweils einander gegenüberliegende axiale Endbereiche von zwei zu beiden Seiten der Fundamentblöcke 30,31 angeordneten Doppel-T-Trägern 33.

Da der vordere Fundamentblock 30, wie in der Aufsicht aus Figur 10 erkennbar, eine geringere Breite aufweist als der hintere Fundamentblock 31 ist an jedem Doppel-T-Träger 33, konkret an dessen vorderem axialen Endbereich ein S-förmiges Überbrückungselement 36 vorgesehen, welches ebenfalls besonders gut in der Aufsicht aus Figur 10 zu erkennen ist.

Das Gestell 29 umfasst ferner vier vorliegend durch Vierkantrohre gebildete vertikale Stützelemente 37, welche jeweils zwei übereinanderliegende Doppel-T-Träger 33 miteinander verbinden und, wie in der Seitenansicht aus Figur 9 erkennbar, auf dem Untergrund stehen, so dass ihre dem Untergrund zugewandten axialen Endbereiche praktisch vier Füße des Gestells 29 bilden. Von den vier Stützelementen 37 haben die beiden dem vorderen Fundamentblock 30 näher liegenden eine geringere Querschnitts-Kantenlänge als die beiden dem hinteren Fundamentblock 31 näher liegenden. An der Oberseite der beiden Stützelemente 37 mit der größeren Querschnitts-Kantenlänge ist jeweils eine Trägerplattform 38 vorgesehen, an welcher der Roboter 9 befestigbar ist. Hierzu weisen die Trägerplattformen 38 jeweils eine Mehrzahl von in den Figuren nicht dargestellten Gewindebohrungen auf, die zu Durchgangsbohrungen in dem Standfuß 10 des Roboters 9 korrespondierend angeordnet sind. Die beiden Trägerplattformen 38 definieren jeweils eine Aufstellposition des Roboters 9 an einer Seite der Gasturbine, über welche vorliegend jeweils ein Viertel der Aufnahmeöffnungen 4 der Gasturbine erreicht werden können und zwar alle Aufnahmeöffnungen 4 aus der unteren Hälfte der ringförmigen Brenneranordnung.

In der Seitenansicht aus Figur 9 und der Aufsicht aus Figur 10 ist die zentrale Achse 39 der Gasturbine, welche mittig zwischen der oberen und unteren Hälfte liegt, eingezeichnet. Ebenfalls markiert ist in den Figuren 9 und 10 die axiale Position der Lagerung des Verdichters auf dem hinteren Fundamentblock 31, konkret durch eine vertikale Achse 40 an entsprechender axialer Position in Figur 9 und eine horizontale Achse 42 an entsprechender axialer Position in Figur 10, sowie die axiale Position der Lagerung der Turbine an dem vorderen Fundamentblock 30, jeweils durch eine vertikale Achse 41 an entsprechender axialer Position in Figur 9 und eine horizontale Achse 43 an entsprechender axialer Position in Figur 10.

Damit auch die Aufnahmeöffnungen 4 der oberen Hälfte der ringförmigen Brenneranordnung erreichbar sind, also die Aufnahmeöffnungen oberhalb der zentralen Achse 39 der Gasturbine, umfasst das Gestell 29 eine in den Figuren nicht dargestellte Erweiterung, über welche der Roboter 9 in Aufstellpositionen etwa 3 Meter oberhalb der Oberseite der jeweiligen Trägerplattform 38 gehalten werden kann. Die Erweiterung umfasst vorliegend einen Verlängerungssockel, der auf der jeweiligen Trägerplattform 38 aufgeschraubt und an dessen Oberseite dann der Roboter 9 angeordnet und ebenfalls festgeschraubt wird.

Um Bautoleranzen des Gestells 29 bzw. einzelnen Komponenten dieses auszugleichen können ferner Futterbleche zum Einsatz kommen, welche an entsprechenden Stellen zwischen dem Gestell 29 und dem jeweiligen Fundamentblock 30, 31 platziert werden.

Die den Roboter 9, den Brenner- 18, den Transition-Adapter 24 und das Gestell 29 umfassende Montagevorrichtung 8 bildet zusammen mit der Gasturbine und den beiden Fundamentblöcken 30, 31 eine Ausführungsform einer erfindungsgemäßen Anordnung.

Für eine Demontage der Brenner 2 wird der Roboter 9 an einer ersten Aufstellposition, also auf einer Trägerplattform 38 des Gestells 29 mittels eines Hallenkrans positioniert und an dem Roboter 9 wird der Brenner-Adapter 18, nicht jedoch der Transition-Adapter 24 befestigt. Der Knickarm 11 wird derart positioniert, dass der im montierten Zustand eines Brenners 2 aus der Aufnahmeöffnung 4 vorstehende axiale Endbereich 5 des Brenners 2 von dem Brenner-Adapter 18 aufgenommen wird. Die freie Stirnseite des Aufnahmerings 21 des Brenners-Adapters 18 liegt dann an den Gehäuseflansch 3 an und der Aufnahmering 21 umgreift den aus der Aufnahmeöffnung 4 vorstehenden, in den Figuren nicht erkennbaren Flansch des Brenners 2. Die entsprechende Positionierung von Brenner-Adapter 18 und Brenner 2 relativ zueinander kann - für den Fall eines bereits ausgebauten Brenners 2 - der Figur 5 entnommen werden.

In diesem Zustand werden von der Seite her Schrauben durch die Durchgangsbohrungen 20 in dem Aufnahmering 21 des Brenner-Adapters 18 in die Gewindebohrungen eingeschraubt, welche in dem Flansch des Brenners 2 vorgesehen sind, um den Brenner 2 an dem Brenner-Adapter 18 lösbar zu befestigen. Nach der Befestigung kann der Brenner 2 durch entsprechende Steuerung des Roboters 9 aus seiner Einbauposition in dem Gehäuse 1 herausgezogen werden. Bei dem dargestellten Ausführungsbeispiel wird der ausgebaute Brenner 2 in einem für dessen vorrübergehende Aufnahme bereitgestellten Haltegestell 28 mit Rollen, welches in der Figur 5 dargestellt ist, abgelegt. Im abgelegten Zustand wird die Befestigung zwischen Brenner 2 und Brenner-Adapter 18 gelöst, indem die entsprechenden Schrauben wieder herausgedreht werden.

Nachdem sämtliche Brenner 2 der Gasturbine, welche ohne ein Umsetzen des Roboters 9 erreichbar sind, auf die vorstehend beschriebene erfindungsgemäße Weise ausgebaut wurden, wird der Roboter 9 mittels des Hallenkrans in eine andere Aufstellposition gebracht. Bei dem dargestellten Ausführungsbeispiel wird der Roboter 9 mittels des Hallenkrans zunächst auf der Trägerplattform 38 auf der anderen Seite positioniert, um die verbleibenden Brenner 2 der unteren Hälfte der ringförmigen Brenneranordnung zu demontieren. Anschließend wird der Roboter 9 mittels des Hallenkrans angehoben, die in den Figuren nicht dargestellte Erweiterung des Gestells 29 wird montiert und der Roboter 9 wird in einer oberen Aufstellposition, die etwa 3 Meter oberhalb der vorangegangenen Aufstellpositionen liegt, aufgestellt, um die Brenner 2 der oberen Hälfte - zunächst auf der einen Seite und - nach einem erneuten Versetzen des Roboters 9 in die obere Aufstellposition auf der anderen Seite der Gasturbine - die restlichen Brenner 2 der oberen Hälfte zu entfernen.

Sind alle Brenner 2 auf diese Weise ausgebaut worden, kommen die Übergangsstücke 7 dran, von denen im vollständig montierten Zustand hinter jedem Brenner 2 eines sitzt.

Hierfür wird der Roboter 9 erfindungsgemäß zusätzlich mit dem Transition-Adapter 24 versehen. Konkret wird der Transition-Adapter 24 lösbar an dem Brenner-Adapter 18 befestigt, indem der Transition-Adapter 24 bereitgestellte und der Brenner-Adapter 18 mittels des Roboters 9 derart positioniert wird, dass der Aufnahmering 21 des Brenner-Adapters 18 die Grundplatte 25 des Transition-Adapters 24 formschlüssig umgreift. Die entsprechende Positionierung kann der Figur 4 entnommen werden. In dieser Position werden erneut Schrauben durch die Durchgangsbohrungen 20 in dem Aufnahmering 21 - diesmal in die Gewindebohrungen in der Grundplatte 25 des Transition-Adapters 24 - eingeschraubt.

Der mit dem Brenner-Adapter 18 und dem an diesem befestigten Transition-Adapter 24 versehene Roboter 9 wird derart positioniert, dass der Transition-Adapter 24 an einem montierten, also in dem Gehäuse 1 in angeordneten Übergangsstück 7 in Anlage kommt. Konkret wird der bewegbar entlang der Führungsstangen 26 befestigte Halteschlitten 27 in Anlage an das Übergangsstück 7 gebracht, wofür sich der Halteschlitten 27 in seiner von der Grundplatte 25 am weitesten entfernten Position befindet, also in dem in Figur 4 dargestellten Zustand.

Der Transition-Adapter 24, konkret der bewegbar entlang der Führungsstangen 26 befestigte Halteschlitten 27 wird anschließend an dem montierten Übergangsstück 7 lösbar befestigt, indem jeweils ein Fassstück in einen der beiden außenseitig an den Übergangsstücken 7 vorgesehenen Haltebögen eingesetzt und die Fassstücke an dem Halteschlitten 27 festgeschraubt werden. Das Übergangsstück 7 wird dann aus seiner Einbauposition entfernt, indem zunächst der Halteschlitten 27 in seine der Grundplatte 25 nächsten Position, die in der Figur 6 erkennbar ist, verfahren und dann der Roboter 9 derart gesteuert wird, dass das Übergangsstück 7 aus dem Gehäuse 1 entnommen und neben diesem abgestellt wird.

Die Befestigung des Übergangsstücks 7 an dem Halteschlitten 27 wird anschließend gelöst und alle verbleibenden, ohne ein Umsetzen des Roboters 9 aus der aktuellen Aufstellposition erreichbare Übergangsstücke 7 werden auf die gleiche Weise aus dem Gehäuse 1 entfernt. Der Roboter 9 wird anschließend mittels des Hallenkrans in die drei verbleibenden Aufstellpositionen gebracht, wobei die Erweiterung des Gestells 29, um diesen in den unteren Aufstellpositionen anordnen zu können, entfernt wird. Von den drei weiteren Aufstellpositionen aus werden die verbleibenden Übergangsstücke 7 auf die vorstehend beschriebene Weise entfernt.

Für die Remontage der Übergangsstücke 7 und Brenner 2, beispielsweise nach deren Inspektion und/oder Reparatur bzw. einer Montage neuer Übergangsstücke 7 und Brenner 2 werden die vorstehend beschriebenen Schritte analog - zweckmäßiger Weise zunächst für sämtliche Übergangsstücke 7 und nach anschließender Entfernung des Transition-Adapters 22 für alle Brenner 2 oder zumindest für alle von dem Roboter 9 ohne Umpositionierung dieses zu erreichenden Brenner und Übergangsstücke 7 - durchgeführt, wobei die Übergangsstücke 7 und Brenner 2 mit dem Roboter 9 nun nicht aus dem Gehäuse 1 entfernt sondern in ihre jeweilige Einbauposition innerhalb dieses gebracht werden.

Durch die erfindungsgemäße Verwendung eines mit einem Brenner-Adapter 18 und - nur für den Fall der Montage bzw. Demontage von Übergangsstücken 7 - einem Transition-Adapter 24 versehenen Roboters 9 kann die Montage- und/oder Demontagezeit gegenüber dem Stand der Technik deutlich reduziert werden. Durch die Steuerung des Roboters 9 sind die Wege zu den Einbaupositionen bereits vorgegeben, daher verkürzen sich die Anfahrtszeiten der Komponenten erheblich, betragen konkret nur 2 bis 3 Minuten je zu (de)montierender Komponente. Mittels des mit einem Brenner-Adapter versehenen Roboters können die Brenner und mittels des mit dem Brenner-Adapter 18 und Transition-Adapter 24 versehenen Roboters 9 können die Übergangsstücke 7 direkt gegriffen und montiert bzw. demontiert werden. Zwischenschritte oder ein Umsetzen sind nicht erforderlich. Da die Montage und/oder Demontage nahezu vollständig bzw. vollständig automatisiert erfolgt, wird eine besonders hohe Sicherheit für das Bedienpersonal erreicht. Ein händisches Bewegen der schweren Brenner 2 bzw. Übergangsstücke 7 ist nicht erforderlich.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, wobei der Schutzumfang der Erfindung durch die Ansprüche festgelegt wird.

## Patentansprüche

1. Verfahren zur Montage und/oder Demontage von Brennern (2) einer Gasturbine mit einer insbesondere ringförmigen Brennkammer und/oder von Übergangsstücken (7) einer insbesondere ringförmigen Brennkammer einer Gasturbine, bei der ein Adaptersystem gemäß Anspruch 8 mit einem Brenner-Adapter (18) und einem Transitions-Adapter (24) verwendet wird, ein Roboter (9) mit einem Roboterarm (11), insbesondere ein Knickarmroboter (9), mit dem an dem freien Ende des Roboterarms (11) lösbar befestigten Brenner-Adapter (18), der ausgebildet ist, um einen axialen Endbereich (5) eines Brenners (2) für eine Gasturbine aufzunehmen, und der Mittel aufweist, um einen Brenner (2) an dem Brenner-Adapter (18) zu befestigen, bereitgestellt wird,
- der Roboterarm (11) derart positioniert wird, dass ein axialer Endbereich (5) eines Brenners (2) von dem Brenner-Adapter (18) aufgenommen wird,
- der Brenner (2) an dem Brenner-Adapter (18) lösbar befestigt wird,
- der Brenner (2) mittels des Roboters (9) aus einer Einbauposition in dem Gehäuse (1) der Brennkammer einer Gasturbine entfernt oder mittels des Roboters (9) in eine Einbauposition in dem Gehäuse (1) der Brennkammer einer Gasturbine gebracht wird,
- die Befestigung des Brenners (2) an dem Brenner-Adapter (18) gelöst wird,
- an dem Brenner-Adapter (18), insbesondere an dessen von dem freien Ende des Roboterarms (11) abgewandten Seite, der Transition-Adapter (24), der Mittel aufweist, um ein Übergangsstück (7) der Brennkammer, welches im montierten Zustand insbesondere hinter einem Brenner (2) sitzt, lösbar an dem Transition-Adapter (24) zu befestigen, lösbar befestigt wird,
- der Roboterarm (11) derart positioniert wird, dass der Transition-Adapter (24) an einem Übergangsstück (7) in Anlage kommt,
- das Übergangsstück (7) an dem Transition-Adapter (24) lösbar befestigt wird,
- das Übergangsstück (7) mittels des Roboters (9) aus einer Einbauposition in dem Gehäuse (1) der Brennkammer entfernt oder in eine Einbauposition in dem Gehäuse (1) der Brennkammer gebracht wird, und
- die Befestigung des Übergangsstücks (7) an dem Transition-Adapter (24) gelöst wird,

2. Verfahren nach Anspruch 1, **dadurch gekennzeichnet, dass**
- im ersten Schritt ein Roboter (9) mit einem Brenner-Adapter (18) bereitgestellt wird, der ausgebildet ist, um denjenigen axialen Endbereich (5) eines Brenners (2) aufzunehmen, der im montierten Zustand des Brenners (2) aus einer in einem Gehäuseflansch (3) eines Brennkammergehäuses (1) für die Aufnahme des Brenners (2) vorgesehene Aufnahmeöffnung (4) vorsteht, und
- im zweiten Schritt der Roboterarm (11) derart positioniert wird, dass der Brenner-Adapter (18) den im montierten Zustand vorstehenden axialen Endbereich (5) des Brenners (2) aufnimmt.

3. Verfahren nach einem der vorhergehenden Ansprüche,
**dadurch gekennzeichnet, dass**
ein frei programmierbarer Roboter (9) und/oder ein Roboter (9) mit wenigstens sechs, insbesondere genau sechs Bewegungsachsen verwendet wird.

4. Verfahren nach einem der vorhergehenden Ansprüche,
**dadurch gekennzeichnet, dass**
ein Roboter (9) bereitgestellt wird, der aufgrund seiner Ausgestaltung und Dimensionierung maximal drei Mal versetzt werden muss, um sämtliche Brenner (2) und/oder Übergangsstücke (7) einer Gasturbine mit ringförmiger Brennkammer zu erreichen.

5. Verfahren nach einem der vorhergehenden Ansprüche,
**dadurch gekennzeichnet, dass**
der Roboter (9) mittels eines Krans, insbesondere eines Hallenkrans an verschiedenen Aufstellpositionen neben der Gasturbine positioniert wird, insbesondere an zwei sich in ihrer Höhe unterscheidenden Aufstellpositionen auf der einen Seite der Gasturbine und an zwei sich in ihrer Höhe unterscheidenden Aufstellpositionen auf der gegenüberliegenden Seite der Gasturbine.

6. Verfahren nach einem der vorhergehenden Ansprüche,
**dadurch gekennzeichnet, dass**
der Roboter (9) auf wenigstens einem an dem Fundament der Gasturbine, insbesondere an wenigstens zwei Fundamentblöcken der Gasturbine fixierten Gestell bereitgestellt wird.

7. Verfahren nach einem der vorhergehenden Ansprüche,
**dadurch gekennzeichnet, dass**
ein Roboter (9) mit einem Roboterarm (11) bereitgestellt wird, an dessen freiem Ende ein Brenner-Adapter (18) nach einem der Ansprüche 9 bis 11 insbesondere lösbar befestigt ist, wobei der Innendurchmesser des Aufnahmerings des Brenner-Adapters (18) an den Außendurchmesser eines im montierten Zustand eines Brenners (2) aus einer in einem Gehäuseflansch (3) eines Brennkammergehäuses (1) für die Aufnahme des Brenners (2) vorgesehene Aufnahmeöffnung (4) vorstehenden Flansches eines Brenners (2) angepasst ist.

8. Adaptersystem umfassend einen Brenner-Adapter (18) und einen Transition-Adapter (24) zur Verwendung in dem Verfahren nach einem der vorhergehenden Ansprüche, wobei der Brenner-Adapter (18) ausgebildet ist, um einen axialen Endbereich (5) eines Brenners (2) für eine Gasturbine aufzunehmen, mit einer Fixierplatte (19), die Mittel zur lösbaren Befestigung an dem freien Ende eines Roboterarms (11), insbesondere eine Mehrzahl von Gewinde- und/oder Durchgangsbohrungen (20), aufweist, und mit einem vor der Fixierplatte (19) und beabstandet zu dieser angeordneten kreisförmigen Aufnahmering (21) zur Aufnahme des axialen Endbereichs (5) eines Brenners (2), der sich zumindest im Wesentlichen parallel zu der Fixierplatte (19) erstreckt und an dieser befestigt ist, wobei in dem Aufnahmering (21) in Umfangsrichtung beabstandete radiale Durchgangs- (20) und/oder Gewindebohrungen vorgesehen sind, und wobei der Transition-Adapter (24) Mittel aufweist, um ein Übergangsstück (7) der Brennkammer, welches im montierten Zustand insbesondere hinter einem Brenner (2) sitzt, lösbar an dem Transition-Adapter (24) zu befestigen, mit einer runden Grundplatte (25) und mit fünf an der Grundplatte (25) befestigten und von dieser zumindest im Wesentlichen orthogonal abragenden Führungsstangen (26), die jeweils mehrere zehn Zentimeter, insbesondere wenigstens 50 cm lang sind, und mit einem entlang der Führungsstange (26) bewegbar gehaltenen Halteschlitten (27), welcher Mittel zur lösbaren Befestigung eines Übergangsstücks (7) an dem Halteschlitten (27) aufweist, wobei der Innendurchmesser des Aufnahmerings (21) des Brenner-Adapters (18) und der Außendurchmesser der Grundplatte (25) des Transition-Adapters (24) aneinander angepasst sind, und wobei in der Mantelfläche der Grundplatte des Transition-Adapters (24) radiale Gewindebohrungen vorgesehen sind, die zu den Durchgangsbohrungen in dem Aufnahmering (21) des Brenner-Adapters (2) korrespondieren, so dass die Grundplatte (25) im innerhalb des Aufnahmerings (21) angeordneten Zustand mit dem Aufnahmering (21) verschraubt werden kann, um den Transition-Adapter (24) lösbar an dem Brenner-Adapter (2) zu fixieren.

9. Adaptersystem nach Anspruch 8,
**dadurch gekennzeichnet, dass**
die Fixierplatte (19) kreisrund und die Fixierplatte (19) und der Aufnahmering (21) koaxial zueinander angeordnet sind und/oder dass der Aufnahmering (21) einen größeren Durchmesser als die Fixierplatte (19) aufweist.

10. Montagevorrichtung (8) zur Verwendung in dem Verfahren nach einem der Ansprüche 1 bis 7,
umfassend einen Roboter (9) mit einem Roboterarm (11), insbesondere einen Knickarmroboter (9), und ein Adaptersystem nach Anspruch 8.

11. Vorrichtung nach Anspruch 10,
**dadurch gekennzeichnet, dass** es sich bei dem Roboter (9) um einen frei programmierbaren Roboter (9) handelt.

12. Vorrichtung nach Anspruch 10 oder 11,
weiterhin umfassend ein Gestell (29), welches Mittel aufweist, um an einem Fundament einer Gasturbine, insbesondere an zwei beabstandet zueinander angeordneten Fundamentblöcken (30, 31) einer Gasturbine fixiert zu werden und welches Mittel aufweist, über die der Roboter (9), insbesondere ein Standfuß (10) des Roboters (9), an dem Gestell (29) befestigt oder befestigbar ist.

13. Vorrichtung nach Anspruch 12,
**dadurch gekennzeichnet, dass**
das Gestell (29) vier Doppel-T-Träger (33) und vier Stützelemente (37), von denen jeweils zwei Stützelemente (37) zwei zueinander beabstandete und bevorzugt zumindest im Wesentlichen parallel zueinander orientierte Doppel-T-Träger (33) miteinander verbinden, und vier als Anker dienende Spannseile (35), die jeweils zwei axiale Endbereiche von zwei nicht über Stützelemente (37) verbundenen Doppel-T-Trägern (33) miteinander verbinden, sowie zwei Trägerplattformen (38) für den Roboter (9), die bevorzugt jeweils an dem oberen Ende eines der Stützelemente (37) angeordnet sind und Mittel zur Befestigung des Roboters (9), insbesondere eines Standfußes (10) des Roboters (9) aufweisen, umfasst.

14. Anordnung umfassend eine Gasturbine, ein Fundament, auf welchem die Gasturbine angeordnet ist, und eine Montagevorrichtung nach Anspruch 12 oder 13,
wobei das Fundament zwei voneinander beabstandete Fundamentblöcke (30, 31) umfasst, die bevorzugt integral mit dem Untergrund ausgebildet sind, und wobei einer der Fundamentblöcke (31) einen ersten, den Verdichter umfassenden Teil der Gasturbine und der andere Fundamentblock (30) einen zweiten, die Brennkammer umfassenden Teil der Gasturbine trägt, und wobei die Fundamentblöcke (30, 31) als Widerlager zur lösbaren Befestigung des Gestells (29) für den Roboter (9) dienen.

## Claims

1. Method for the installation and/or removal of burners (2) of a gas turbine having an in particular annular combustion chamber, and/or of transition pieces (7) of an in particular annular combustion chamber of a gas turbine, in which
- use is made of an adapter system according to Claim 8 with a burner adapter (18) and a transition adapter (24),
- provision is made of a robot (9) having a robot arm (11), in particular an articulated-arm robot (9), having the burner adapter (18) which is releasably attached to the free end of the robot arm (11) and which is designed to receive an axial end region (5) of a burner (2) for a gas turbine, and which has means for attaching a burner (2) to the burner adapter (18),
- the robot arm (11) is positioned in such a way that an axial end region (5) of a burner (2) is received by the burner adapter (18),
- the burner (2) is releasably attached to the burner adapter (18),
- the burner (2) is removed, using the robot (9), from an installation position in the casing (1) of the combustion chamber of a gas turbine, or is brought, using the robot (9), into an installation position in the casing (1) of the combustion chamber of a gas turbine,
- the attachment of the burner (2) to the burner adapter (18) is released,
- the transition adapter (24), which has means for releasably attaching, to the transition adapter (24), a transition piece (7) of the combustion chamber that in the installed state sits in particular behind a burner (2), is releasably attached on the burner adapter (18), in particular on its side oriented away from the free end of the robot arm (11),
- the robot arm (11) is positioned in such a way that the transition adapter (24) comes to bear against a transition piece (7),
- the transition piece (7) is releasably attached to the transition adapter (24),
- using the robot (9), the transition piece (7) is removed from an installation position in the casing (1) of the combustion chamber, or is brought into an installation position in the casing (1) of the combustion chamber, and
- the attachment of the transition piece (7) to the transition adapter (24) is released.

2. Method according to Claim 1, **characterized in that**
- in the first step provision is made of a robot (9) having a burner adapter (18) that is designed to receive that axial end region (5) of a burner (2) that in the installed state of the burner (2) projects from a receiving opening (4), provided in a casing flange (3) of a combustion chamber casing (1), for receiving the burner (2), and
- in the second step the robot arm (11) is positioned in such a way that the burner adapter (18) receives the axial end region (5) of the burner (2), which projects axially in the installed state.

3. Method according to one of the preceding claims, **characterized in that** use is made of a freely programmable robot (9) and/or of a robot (9) having at least six, in particular exactly six, axes of movement.

4. Method according to one of the preceding claims, **characterized in that** provision is made of a robot (9) which, owing to its configuration and dimensioning, needs to be moved at most three times in order to reach all of the burners (2) and/or transition pieces (7) of a gas turbine having an annular combustion chamber.

5. Method according to one of the preceding claims, **characterized in that** the robot (9) is positioned using a crane, in particular an overhead crane, and in various setup positions next to the gas turbine, in particular at two different-height setup positions on one side of the gas turbine and two different-height setup positions on the opposite side of the gas turbine.

6. Method according to one of the preceding claims, **characterized in that** the robot (9) is provided on at least a frame fixed to the base of the gas turbine, in particular to at least two base blocks of the gas turbine.

7. Method according to one of the preceding claims, **characterized in that** provision is made of a robot (9) having a robot arm (11) at the free end of which there is attached, in particular releasably, a burner adapter (18) according to one of Claims 9 to 11, wherein the internal diameter of the receiving ring of the burner adapter (18) is adapted to the external diameter of a flange of a burner (2), which flange projects in the installed state of a burner (2) from a receiving opening (4), provided in a casing flange (3) of a combustion chamber casing (1), for receiving the burner (2).

8. Adapter system comprising a burner adapter (18) and a transition adapter (24) for use in the method according to one of the preceding claims, wherein the burner adapter (18) is designed to receive an axial end region (5) of a burner (2) for a gas turbine, having a fixing plate (19) which has means for releasably attaching to the free end of a robot arm (11), in particular a plurality of threaded and/or through-bores (20), and having a circular receiving ring (21) that is arranged in front of and spaced apart from the fixing plate (19), which receiving ring serves for receiving the axial end region (5) of a burner (2) and extends essentially parallel to the fixing plate (19) and is attached thereto, circumferentially spaced-apart radial through-bores (20) and/or threaded bores being provided in the receiving ring (21), and wherein the transition adapter (24) has means for releasably attaching, to the transition adapter (24), a transition piece (7) of the combustion chamber which in the installed state sits in particular behind a burner (2), with a round base plate (25) and five guide rods (26) that are attached to the base plate (25) and project therefrom at least essentially orthogonally, these rods each being several tens of centimetres long, in particular at least 50 cm long, and with a holding carriage (27) that is held so as to be able to move along the guide rod (26), which carriage has means for releasably attaching a transition piece (7) to the holding carriage (27), wherein the internal diameter of the receiving ring (21) of the burner adapter (18) and the external diameter of the base plate (25) of the transition adapter (24) match one another, and wherein in the lateral face of the base plate of the transition adapter (24) there are provided radial threaded bores that correspond to the through-bores in the receiving ring (21) of the burner adapter (2), in such a way that the base plate (25), when arranged inside the receiving ring (21), can be secured by screws to the receiving ring (21) in order to releasably fix the transition adapter (24) to the burner adapter (2).

9. Adapter system according to Claim 8, **characterized in that** the fixing plate (19) is circular and the fixing plate (19) and the receiving ring (21) are arranged coaxially with one another, and/or **in that** the receiving ring (21) has a larger diameter than the fixing plate (19).

10. Installation device (8) for use in the method according to one of Claims 1 to 7, comprising a robot (9) having a robot arm (11), in particular an articulated-arm robot (9), and an adapter system according to Claim 8.

11. Device according to Claim 10, **characterized in that** the robot (9) is a freely programmable robot (9).

12. Device according to Claim 10 or 11, further comprising a frame (29) which has means for being fixed to a pedestal of a gas turbine, in particular to two pedestal blocks (30, 31), arranged spaced apart from one another, of a gas turbine, and which has means by means of which the robot (9), in particular a standing foot (10) of the robot (9), can be or is attached to the frame (29).

13. Device according to Claim 12, **characterized in that** the frame (29) comprises four I-beams (33) and four support elements (37), of which at least two support elements (37) connect, to one another, two I-beams (33) that are spaced apart from one another and are preferably oriented at least essentially parallel to one another, and four tensioning cables (35) that serve as anchors, each of these cables connecting, to one another, two axial end regions of two I-beams (33) that are not connected by support elements (37), and two beam platforms (38) for the robot (9), which platforms are preferably arranged respectively at the upper end of one of the support elements (37) and have means for attaching the robot (9), in particular a standing foot (10) of the robot (9) .

14. Arrangement comprising a gas turbine, a pedestal on which the gas turbine is arranged, and an installation device according to Claim 12 or 13, wherein the pedestal comprises two mutually spaced-apart pedestal blocks (30, 31) which are preferably integral with the foundations, and wherein one of the pedestal blocks (31) has a first part of the gas turbine comprising the compressor, and the other pedestal block (30) bears a second part of the gas turbine comprising the combustion chamber, and wherein the pedestal blocks (30, 31) serve as an abutment for the releasable attachment of the frame (29) for the robot (9).

## Revendications

1. Procédé de montage et/ou de démontage de brûleurs (2) d'une turbine à gaz ayant une chambre de combustion, notamment annulaire, et/ou de pièces de transition d'une chambre de combustion, notamment annulaire, d'une turbine à gaz, dans lequel on utilise un système d'adaptateur suivant la revendication 8, ayant un adaptateur (18) de brûleur et un adaptateur (24) de transition,
dans lequel on se procure un robot (9) ayant un bras (11) de robot, notamment un robot (9) à bras coudé, ayant l'adaptateur (18) de brûleur, fixé de manière amovible à l'extrémité libre du bras (11) de robot, constitué pour recevoir une partie (5) d'extrémité axiale d'un brûleur (2) d'une turbine à gaz et ayant des moyens pour fixer un brûleur (2) à l'adaptateur (18) de brûleur,
- on met le bras (11) de robot en position de manière à ce qu'une partie (5) d'extrémité axiale d'un brûleur (2) soit reçue par l'adaptateur (18) de brûleur,
- on fixe de manière amovible le brûleur (2) à l'adaptateur (18) de brûleur,
- on retire le brûleur (2) au moyen du robot (9) d'une position de montage dans l'enveloppe de la chambre combustion d'une turbine à gaz ou on le met au moyen du robot (9) dans une position de montage dans l'enveloppe (1) de la chambre de combustion d'une turbine à gaz,
- on défait la fixation du brûleur (2) à l'adaptateur (18) de brûleur,
- on fixe de manière amovible à l'adaptateur (18) de brûleur, notamment à son côté loin de l'extrémité libre du bras (11) de robot, l'adaptateur (24) de transition, qui a des moyens pour fixer de manière amovible à l'adaptateur (24) de transition une pièce (7) de transition de la chambre de combustion, qui, à l'état monté, se trouve notamment derrière un brûleur (2),
- on met en position le bras (11) du robot de manière à ce que l'adaptateur (24) de transition vienne en contact avec une pièce (7) de transition,
- on fixe de manière amovible la pièce (7) de transition à l'adaptateur (24) de transition,
- on retire la pièce (7) de transition au moyen du robot (9) d'une position de montage dans l'enveloppe (1) de la chambre de combustion ou on la met dans une position de montage dans l'enveloppe (1) de la chambre de combustion, et
- on défait la fixation de la pièce (7) de transition à l'adaptateur (24) de transition,

2. Procédé suivant la revendication 1,
**caractérisé en ce que**,
- dans le premier stade, on se procure un robot (9) ayant un adaptateur (18) de brûleur, qui est constitué pour recevoir la partie (5) d'extrémité axiale d'un brûleur (2), qui, à l'état monté du brûleur (2), dépasse d'une ouverture (4) de réception prévue, dans une bride (3) d'une enveloppe (1) de la chambre de combustion, pour la réception du brûleur (2), et
- dans un deuxième stade, on met le bras (11) de robot en position de manière à ce que l'adaptateur (18) du brûleur reçoive la partie (5) d'extrémité axiale en saillie, à l'état monté, du brûleur (2).

3. Procédé suivant l'une des revendications précédentes,
**caractérisé en ce que**
on utilise un robot (9) pouvant être programmé librement et/ou un robot (19) ayant exactement six axes de déplacement.

4. Procédé suivant l'une des revendications précédentes,
**caractérisé en ce que**
on se procure un robot (9) qui, en raison de sa conformation et de son dimensionnement, doit être déplacé au maximum trois fois pour atteindre l'ensemble des brûleurs (2) et/ou des pièces (7) de transition d'une turbine à gaz à chambre de combustion annulaire.

5. Procédé suivant l'une des revendications précédentes,
**caractérisé en ce que**
on met le robot (9), au moyen d'une grue, notamment d'une grue de hangar, en diverses positions de montage à côté de la turbine à gaz, notamment en deux positions de montage différentes par leur niveau d'un côté de la turbine à gaz et en deux positions de montage différentes par leur niveau du côté opposé de la turbine à gaz.

6. Procédé suivant l'une des revendications précédentes,
**caractérisé en ce que**
on met le robot (9) sur au moins un bâti fixé à la fondation de la turbine à gaz, notamment sur au moins deux blocs de fondation de la turbine à gaz.

7. Procédé suivant l'une des revendications précédentes,
**caractérisé en ce que**
on se procure un robot (9) ayant un bras (11) de robot, à l'extrémité libre duquel est fixé, notamment de manière amovible, un adaptateur (18) de brûleur sur l'une des revendications 9 à 11, le diamètre intérieur de l'anneau de réception de l'adaptateur (18) du brûleur étant adapté au diamètre extérieur d'une bride du brûleur (2), dépassant, à l'état monté d'un brûleur (2), d'une ouverture (4), prévue pour la réception du brûleur (2), dans une bride (3) d'une enveloppe (1) de chambre de combustion.

8. Système d'adaptateur comprenant un adaptateur (18) de brûleur et un adaptateur (24) de transition à utiliser dans le procédé suivant l'une des revendications précédentes,
dans lequel,
l'adaptateur (18) de brûleur est constitué pour recevoir une partie (15) d'extrémité axiale d'un brûleur (2) d'une turbine à gaz, par une plaque (19) d'immobilisation, qui a des moyens de fixation amovible à l'extrémité libre d'un bras (11) de robot, notamment une pluralité de trous (20) taraudés et/ou traversant, et comprenant un anneau (21) de réception circulaire disposé devant la plaque (19) d'immobilisation et à distance de celle-ci pour la réception de la partie (15) d'extrémité axiale d'un brûleur, qui s'étend au moins sensiblement parallèlement à la plaque (19) d'immobilisation et qui est fixé à celle-ci, dans lequel dans l'anneau (21) de réception sont prévus des trous traversant (20) et/ou taraudés radiaux à distance dans la direction périphérique, et dans lequel l'adaptateur (24) de transition a des moyens pour fixer de manière amovible à l'adaptateur (24) de transition une pièce (7) de transition de la chambre de combustion, qui, à l'état monté, vient notamment derrière un brûleur (2), comprenant une plaque (25) de base circulaire et cinq barres 26 de guidage fixées à la plaque (25) de base et s'éloignant de celle-ci, au moins sensiblement de manière orthogonale, qui ont chacune une longueur de plusieurs dizaines de centimètre, notamment d'au moins 50 centimètres, et comprenant un chariot (27) de maintien, maintenu de manière mobile le long des barres (26) de guidage, lequel a des moyens de fixation amovible d'une pièce (7) de transition au chariot (27) de maintien, le diamètre intérieur de l'anneau (21) de réception de l'adaptateur (18) de brûleur et le diamètre extérieur de la plaque (25) de base de l'adaptateur (24) de transition étant adaptés l'un à l'autre, et dans lequel dans la surface latérale de la plaque de base de l'adaptateur (24) de transition sont prévus des taraudages radiaux, qui correspondent aux trous traversant de l'anneau (21) de réception de l'adaptateur (2) de brûleur, de manière à pouvoir visser la plaque (25) de base, dans l'état disposé à l'intérieur de l'anneau (21) de réception, à l'anneau (21) de réception afin d'immobiliser l'adaptateur (24) de transition de manière amovible à l'adaptateur (2) de brûleur.

9. Système d'adaptateur suivant la revendication 8,
**caractérisé en ce que**
la plaque (19) d'immobilisation est circulaire et la plaque (19) d'immobilisation et l'anneau (21) de réception sont disposés co-axialement l'un à l'autre et/ou **en ce que** l'anneau (21) de réception a un diamètre plus grand que la plaque (19) d'immobilisation.

10. Installation (8) de montage à utiliser dans le procédé suivant l'une des revendications 1 à 7,
comprenant un robot (9) ayant un bras (11) de robot, notamment un robot (9) à bras coudé, et un système d'adaptateur suivant la revendication 8.

11. Installation suivant la revendication 10,
**caractérisée en ce que** le robot (9) est un robot (9) pouvant être programmé librement.

12. Installation suivant l'une des revendications 10 ou 11, comprenant en outre un bâti (29), qui a des moyens pour être immobilisé sur une fondation d'une turbine à gaz, notamment sur deux blocs (30, 31) de fondation disposés à distance l'un de l'autre d'une turbine à gaz, et qui a des moyens par lesquels le robot (9), notamment un pied (10) du robot (9), est fixé au bâti (29) ou peut l'être.

13. Installation suivant la revendication 12,
**caractérisée en ce que**
le bâti (29) comprend quatre poutres (33) en double T et quatre éléments (37) d'appui, dont respectivement deux éléments (37) d'appui relient deux poutres (33) en double T à distance l'une de l'autre et, de préférence, au moins sensiblement parallèle entre elles et quatre câbles (35) de serrage servant d'ancre, qui relient respectivement entre elles deux parties d'extrémité axiale de deux poutres (33) en double T non reliées par des éléments (37) d'appui, ainsi que deux plateformes (38) de support du robot (9), qui sont disposées de préférence respectivement à l'extrémité supérieure de l'un des éléments (37) d'appui et qui ont des moyens de fixation du robot (9), notamment d'un pied (10) du robot (9).

14. Agencement comprenant une turbine à gaz, une fondation sur laquelle la turbine à gaz est disposée et une installation de montage suivant la revendication 12 ou 13,
dans lequel la fondation comprend deux blocs (30, 31) de fondation à distance l'un de l'autre qui, de préférence, sont intégrés au sol et dans lequel l'un des blocs (31) de fondation porte une première partie comprenant le compresseur de la turbine à gaz et l'autre bloc (30) de fondation une deuxième partie comprenant la chambre de combustion de la turbine à gaz et dans lequel les blocs (30, 31) de fondation servent de support pour la fixation amovible du bâti (29) du robot (9).
